# EUROPEAN PATENT APPLICATION

(11) **EP 1 932 572 A1**
(43) Date of publication of application: **18.06.2008**
(21) Application number: 06730057.4
(22) Date of filing: 27.03.2006
(51) Int. Cl.: A63F 13/08, G02B 27/22

(54) **STEREOSCOPIC SPECTACLES**

(30) Priority: 13.09.2005 JP 2005266111
(71) Applicant: Konami Digital Entertainment Co., Ltd., Tokyo 107-8324 (JP)
(72) Inventor: NOJIRI, Shinta, c/o Konami Digital Entertainment Co., Ltd., Tokyo 107-8324 (JP); MOCHIZUKI, Takanori, Tokyo 162-0843 (JP)
(74) Representative: Winter, Brandl, Fürniss, Hübner Röss, Kaiser, Polte Partnerschaft Patent- und Rechtsanwaltskanzlei
(86) International application number: PCT/JP2006/306109
(87) International publication number: WO 2007/032112

(57) **Abstract**

To provide stereoscopic spectacles for enabling a user to stably enjoy stereoscopic viewing of a stereoscopic image shown on a display screen of a portable game machine. Stereoscopic spectacles (1) have a spectacles portion (30) for stereoscopically viewing a stereoscopic image shown on a display screen (91) of a portable game machine (90). Also, the stereoscopic spectacles (1) comprise an abutting front wall (56) and an abutting rear wall (57), placed opposed to each other for abutting on side surfaces of the game machine (90) from two opposed directions with the display screen (91) in-between, when the stereoscopic spectacles (1) are used, and further spectacles supporting portions (50) extending respectively from the abutting front wall (56) and the abutting rear wall (57), these being opposed to each other, for supporting the spectacles portion (39) so as to be placed opposed to the display screen (91) of the game machine (90).

## Description

### TECHNICAL FIELD

The present invention relates to stereoscopic spectacles, and in particular to a technique for viewing a stereoscopic image shown on a display screen of a portable game machine.

### BACKGROUND ART

A so-called stereogram (or stereoscopic image), such as a picture or a pattern which enables stereoscopic viewing of a flat image by utilizing a parallax between a left eye and a right eye, is widely enjoyed. In stereoscopic viewing of a stereoscopic image, the sight line directions of the right and left eyes of the viewer are deliberately directed to a point closer or farther relative to the stereoscopic image to thereby form an image by the light which is received by the left and right eyes to realize the image as a stereoscopic image. As conventional stereoscopic spectacles for use in stereoscopic viewing, spectacles to be mounted on a paper sheet where a stereoscopic image is drawn or to be worn on the user' s face are known, such as those disclosed in Registered Japanese Utility Model No. 3109078.

### DISCLOSURE OF THE INVENTION

The applicant of the present application has considered displaying of a stereoscopic image on a display screen of a portable game machine.

However, as the user keeps holding a portable game machine in their hands while playing the game, the display screen may move due to the user's game operation. This may cause the stereoscopic spectacles to be displaced in position relative to the display screen when the user plays a game. Therefore, the user cannot readily and stably enjoy stereoscopic viewing of a stereoscopic image.

The present invention has been conceived in view of the above, and aims to provide stereoscopic spectacles for enabling the user to stably and stereoscopically viewing a stereoscopic image shown on the display screen of a portable game machine.

In order to address the above-described problem, according to one aspect of the present invention, there is provided stereoscopic spectacles having a spectacles portion for stereoscopically viewing a stereoscopic image shown on a display screen of a portable game machine, comprising abutment walls placed opposed to each other for abutting on side surfaces of the game machine from two opposed directions with the display screen in-between when the stereoscopic spectacles are used; and spectacles supporting portions extending from the respective abutment walls opposed to each other, for supporting the spectacles portion so as to be placed opposed to the display screen of the game machine.

In the present invention, the stereoscopic spectacles have abutment walls which are opposed to each other and brought to abut on the side surfaces of the game machine from two opposed directions with the display screen in-between when the stereoscopic spectacles are mounted to, and used with, a portable game machine. Then, the spectacles supporting portions extending from the abutment walls support the spectacles portion so as to be positioned opposed to the display screen of the game machine. With this arrangement, displacement in position of the spectacles portion relative to the display screen can be suppressed.

It should be noted that the spectacles supporting portion may be, for example, a bar member, a flat member, a curved member, or the like, which extends from the abutment wall to support the spectacles portion. The spectacles portion may have a colored filter, a lens, and so forth, mounted to the eyepiece, for example. Alternatively, a pair of left and right lenses may constitute the entire spectacles portion.

In one embodiment of the present invention, the stereoscopic spectacles may further comprise a connection portion for connecting the abutment walls that are opposed to each other, to each other in the back side of the display screen.

In the above, the interval between the mutually opposed abutment walls is prevented from being wider to an extent that the abutment walls no longer abut on the side walls of the portable game machine. Thus, displacement in position of the spectacles portion can be more reliably suppressed. Also, the interval between the mutually opposed abutment walls can be kept to a predetermined interval defined by the connection portion.

In one embodiment of the present invention, the connection portion may include attachment means for freely connecting and disconnecting the abutment walls opposed to each other. With the above, the stereoscopic spectacles can be readily mounted to and removed from the game machine.

In one embodiment of the present invention, the spectacles supporting portion may be formed surrounding a space between the display screen and the spectacles portion.

In the above, as the space between the spectacles portion and the display screen is surrounded, the user's sight line direction is concentrated on the display screen, so that the user can concentrate on playing the game by means of stereoscopic viewing.

In one embodiment of the present invention, a part of a lower edge of the spectacles supporting portion may be formed recessed towards the display screen side so as to be located between the display screen and an operation button provided around the display screen. With the above, the operation button of the game machine is located outside the spectacles supporting portion when the stereoscopic spectacles are used. This makes it possible for the user to comfortably operate the button even with the stereoscopic spectacles mounted to the game machine.

In one embodiment of the present invention, the spectacles supporting portion may include a reinforcing structure for increasing strength in a direction in which the display screen is opposed to the spectacles portion.

The user playing the game sees the display screen via the spectacles portion. In the above, the spectacles portion is pressed towards the display screen by the user' s face which is then placed in contact with the spectacles portion, and there is a possibility that the spectacles supporting portion will be transformed. However in the embodiment, the shape of the spectacles supporting portion is maintained as is during execution of the game due to the reinforcing structure of the spectacles supporting portion, which can enhance the durability of the stereoscopic spectacles.

The reinforcing structure is a structure for reinforcing the spectacles supporting portion, using a member which is more rigid than other portions of the stereoscopic spectacles. Specifically, with the other portions made of cardboard, the spectacles supporting portion is reinforced by a member made of plastic, metal, and so forth. Alternatively, the reinforcing structure may be the shape of a spectacles supporting portion expanding sideward while curving or folded along a folding line extending in the direction in which the display screen is opposed to the spectacles portion.

In one embodiment of the present invention, a separator for separating a space between the spectacles portion and the display screen of the game machine into a right side space and left side space may be provided.

In this embodiment, when a stereoscopic image comprising an image for the right eye and an image for the left eye aligned side by side is displayed on the display screen, the right eye is prevented from viewing the image for the left eye and the left eye is prevented from viewing the image for the right eye, so that preferable stereovision can be achieved.

In one embodiment of the present invention, the spectacles portion may include a top surface having a pair of left and right eyepieces, and a slope surface continuous from the top surface and sloping from a portion where the slope surface and the top surface is connected, to extend towards one of the abutment walls opposed to each other.

In this embodiment, the nose tip of the user is prevented from bumping into the spectacles portion, so that the stereoscopic spectacles can have improved functionality.

In one embodiment of the present invention, the spectacles portion may include an opening in a middle portion of the slope surface. In this embodiment, the nose tip of the user can be reliably prevented from bumping into the spectacles portion. Also, when a normal 2D image, rather than a stereoscopic image, is shown on the display screen, the user can directly see the display screen through the opening, without removing the stereoscopic spectacles from the game machine.

### BRIEF DESCRIPTION OF THE DRAWINGS

Fig. 1 is a perspective view of stereoscopic spectacles according to one embodiment of the present invention;
Fig. 2 is a development of the above-described stereoscopic spectacles;
Fig. 3 is a perspective view of the above-described stereoscopic spectacles mounted to a portable game machine;
Fig. 4 is a front view of the above-described stereoscopic spectacles with a spectacles portion and a connection portion developed;
Fig. 5 is a right side view of the above-described stereoscopic spectacles mounted to a portable game machine;
Fig. 6 is a left side view of the above-described stereoscopic spectacles mounted to a portable game machine;
Fig. 7 is a rear elevation of the above-described stereoscopic spectacles mounted to a portable game machine;
Fig. 8 is a view showing the stereoscopic spectacles with the connection portion developed, viewed from below;
Fig. 9 is a perspective view of the stereoscopic spectacles according to other embodiment of the present invention;
Fig. 10 is a development of the stereoscopic spectacles according to the above-described other embodiment;
Fig. 11 is a perspective view of the stereoscopic spectacles mounted to the portable game machine according to the above-described other embodiment; and
Fig. 12 is a left side view of the stereoscopic spectacles mounted to the portable game machine according to the above-described other embodiment.

### BEST MODE FOR CARRYING OUT THE INVENTION

In the following, one embodiment of the present invention will be described based on the following drawings.

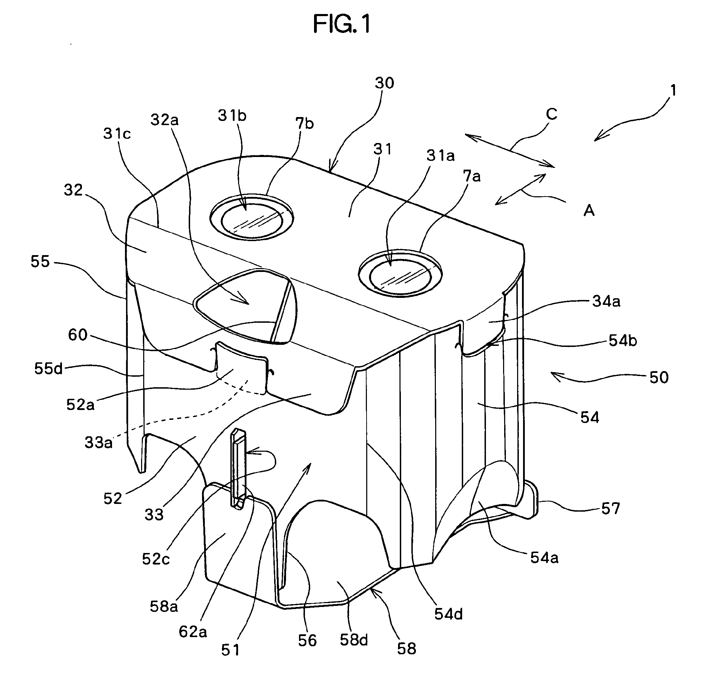

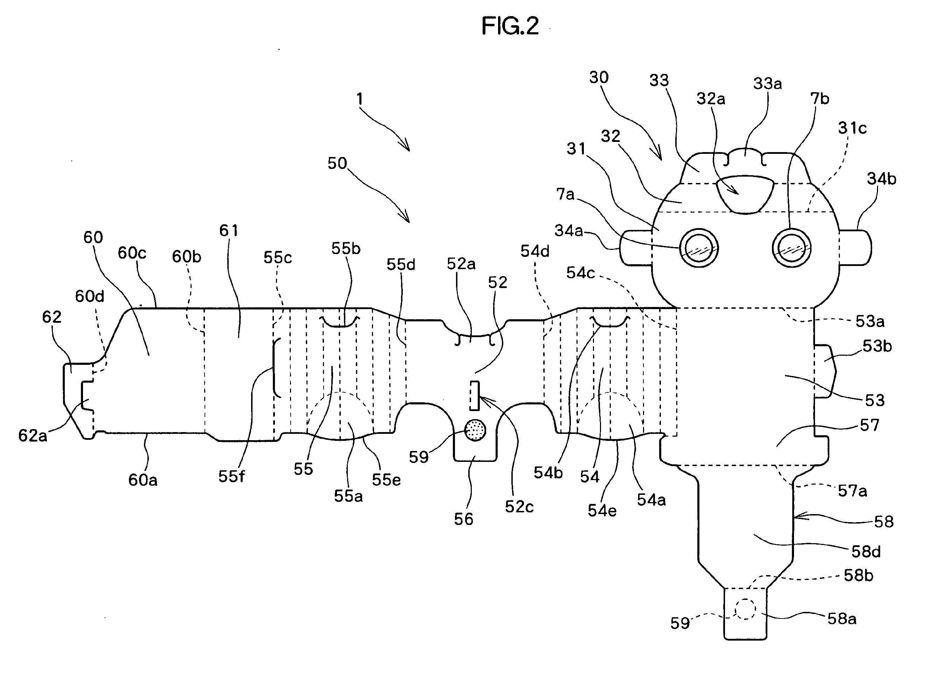

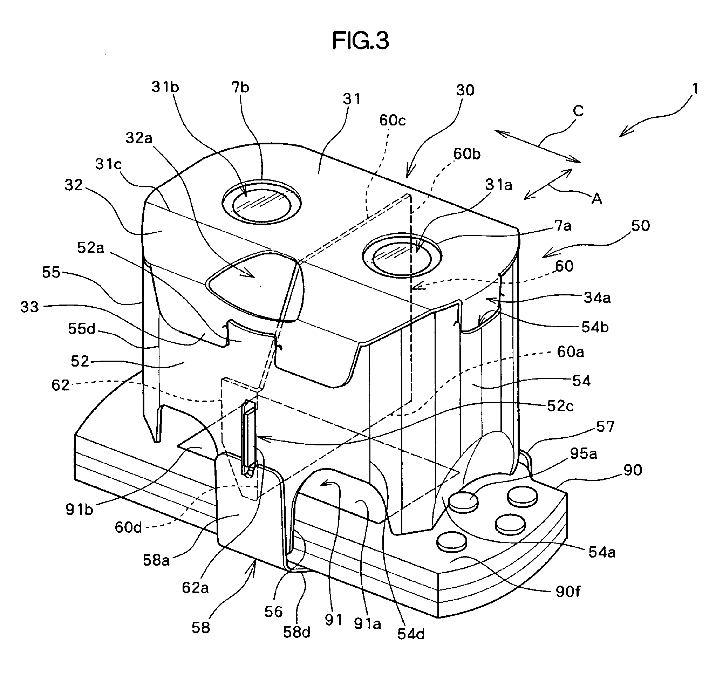

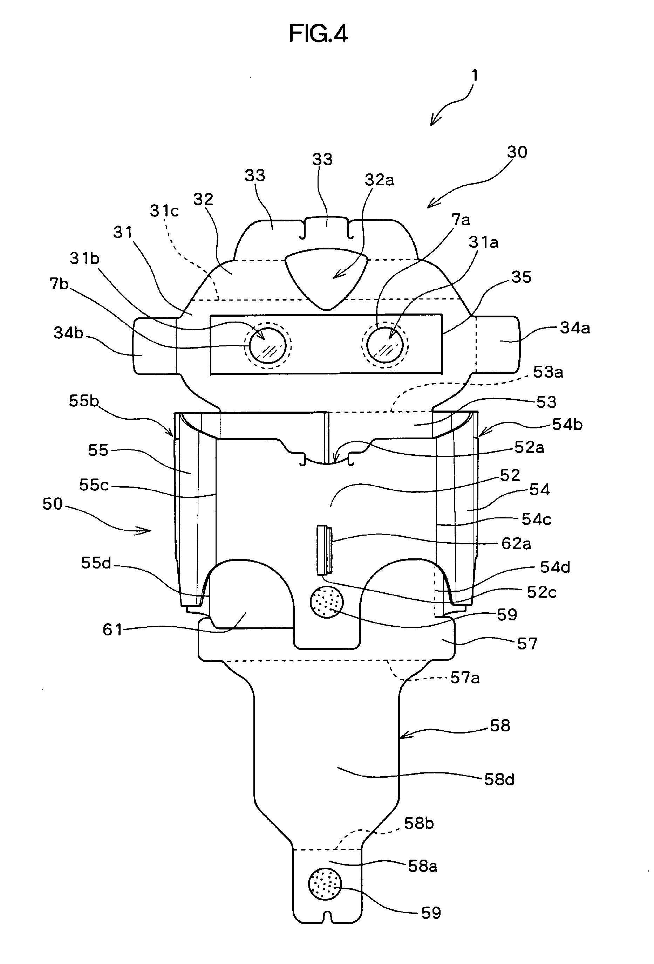

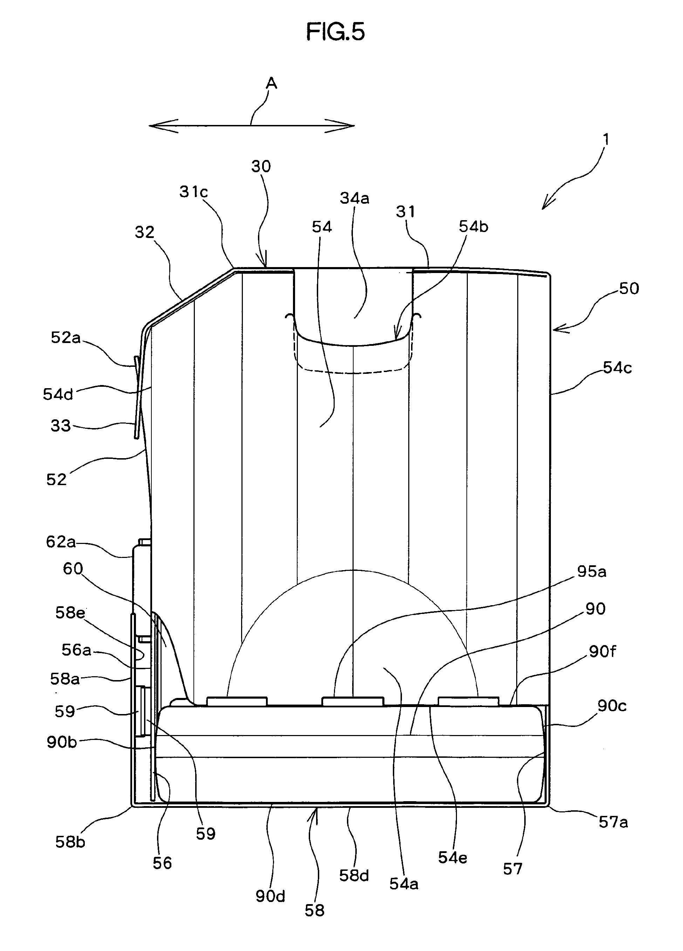

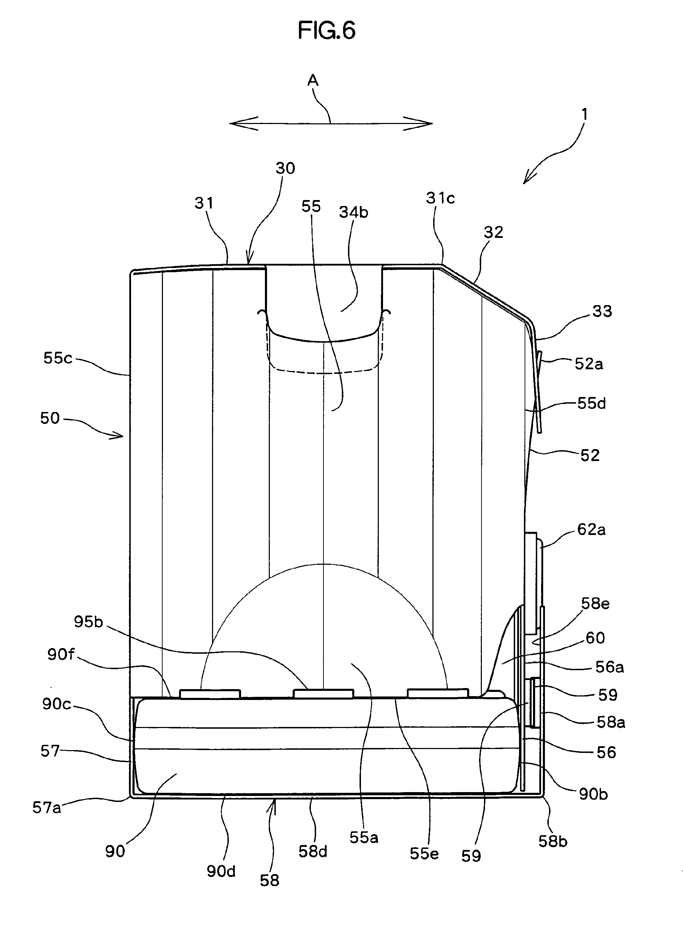

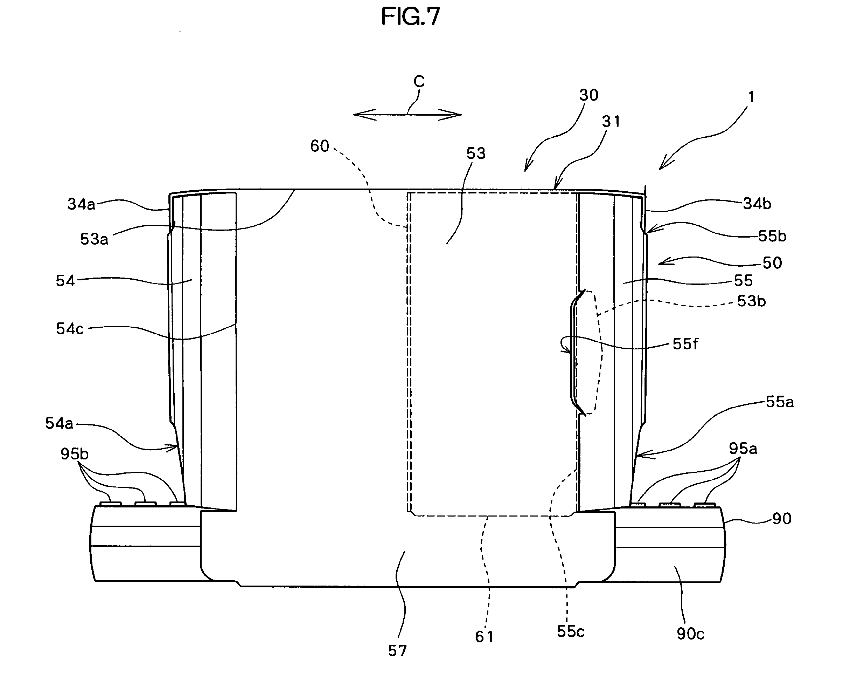

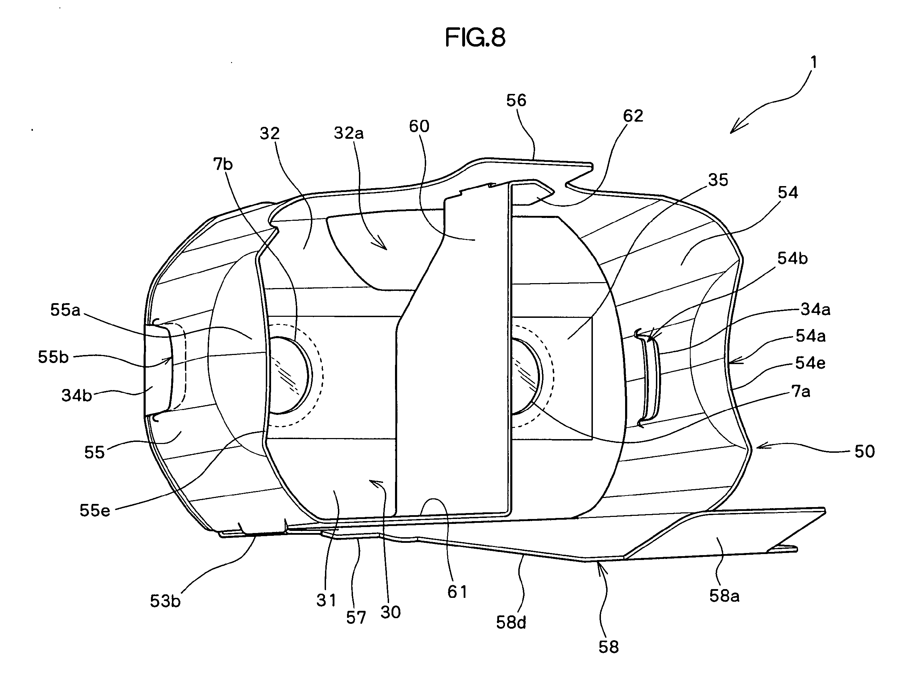

Fig. 1 is a perspective view of stereoscopic spectacles 1 according to this embodiment; Fig. 2 is a development view of the stereoscopic spectacles 1; Fig. 3 is a perspective view of the stereoscopic spectacles 1 mounted to a portable game machine 90; and Fig. 4 is a front view of the stereoscopic spectacles 1 with the spectacles portion 30 and the connection portion 58 developed. Fig. 5 is a right side view of the stereoscopic spectacles 1 mounted to the portable game machine 90; Fig. 6 is a left side view of the same; and Fig. 7 is a rear elevation of the same. Fig. 8 shows the stereoscopic spectacles 1 with the connection portion 58 developed, viewed from below. In these drawings, the same portion is identified by the same reference numeral.

The stereoscopic spectacles 1 are used to see a stereoscopic image shown on the display screen 91 of a substantially rectangular portable game machine 90. The stereoscopic spectacles 1 comprise a spectacles portion 30, a spectacles supporting portion 50, an abutting front wall 56, an abutting rear wall 57, and a separator 60, in which the abutting front wall 56 is placed opposed to the abutting rear wall 57. As shown in Fig. 2, the respective portions are integrally formed using cardboard, and the cardboard is folded along the folding lines defined between the respective portions, to assemble the stereoscopic spectacles 1 . A method for assembling the stereoscopic spectacles 1 will be described later in detail. A stereoscopic image comprising a right eye image and a left eye image aligned side by side is shown on the display screen 91 of the game machine 90 in which the stereoscopic spectacles 1 are to be mounted. The right eye image is shown in a right eye image area 91a ensured on the right side relative to the central line in the right-left direction (the direction indicated by C in Fig. 3) of the display screen 91, while the left eye image is shown in a left eye image area 91b ensured on the left side relative to the central line (see Fig. 3).

Initially, the spectacles portion 30 will be described. The spectacles portion 30, as shown in Fig. 1 or Fig. 3, comprises a substantially rectangular top surface 31 and a slope surface 32. The top surface 31 is located above and opposed to, while covering, the display screen 91 of the game machine 90. Also, the top surface 31 is supported, along the peripheral thereof, by the spectacles supporting portion 50. The top surface 31 has a right eyepiece 7a and a left eyepiece 7b. The user can see a stereoscopic image shown on the display screen 91 via the eyepieces 7a, 7b.

The slope surface 32 is formed continuous from the edge 31c of the top surface 31. A folding line is defined on the edge 31c, and the slope surface 32 slopes from the edge 31c toward the abutting front wall 56 side (the display screen 91 side) to be described later. A substantially triangular opening 32a is formed in the middle of the slope surface 32 in the right-left. The opening 32a is located at equal distances from the eyepieces 7a and 7b, respectively, that is, at the position of the nose tip of the user seeing the display screen 91 via the eyepieces 7a, 7b with their face placed close to the spectacles portion 30.

The spectacles portion 30 has a hanging portion 33 on the side opposite the top surface 31 with the slope surface 32 in-between. The hanging portion 33 is movable so as to placed on and off the spectacles supporting portion 50. That is, the hanging portion 33 is attached to or separated from the spectacles supporting portion 50, whereby the spectacles portion 30 is opened or closed. A structure for opening or closing the spectacles portion 30 will be described later in detail.

The top surface 31 has a pair of right and left openings 31a, 31b formed thereon. In the openings 31a, 31b, convex lenes are mounted, which have been inserted therein from the back of the top surface 31, and a seal 35 having a pair of right and left openings formed thereon is pasted on the top surface 31, whereby the convex lenses are fixed to the top surface 31. As described above, the eyepieces 7a, 7b are formed (see Fig. 4 or Fig. 8).

In the following, the abutting front wall 56 and the abutting rear wall 57 will be described. As shown in Fig. 5 or Fig. 6, the abutting front wall 56 is located opposed to the abutting rear wall 57. These walls constitute walls which are brought to abut on the side walls of the game machine 90 from the front and rear directions thereof (the direction indicated by A in Fig. 1), respectively, so as to hold the display screen 91 in-between. That is, the abutting front wall 56 is brought to abut on the exterior surface 90b of the front wall of the game machine 90 from the front direction thereof, while the abutting rear wall 57 is brought to abut on the exterior surface 90c of the back wall from the rear direction thereof, such that the game machine 90 is held between the abutting front wall 56 and the abutting rear wall 57. It should be noted that the abutting rear wall 57 is long in the right-left direction so that a larger area for contacting the game machine 90 can be ensured (see Fig. 7).

The abutting front wall 56 and the abutting rear wall 57 are connected to each other at the rear side of the display screen 91 by a connection portion 58, which is to be positioned in contact with the exterior surface 90d of the base wall of the game machine 90.

Specifically, the connection portion 58 comprises a panel-like base wall 58d and a panel-like attachment portion 58a formed continuous from the base wall 58d with a folding line 58b defined in-between (see Fig. 2). As shown in Fig. 5 or Fig. 6, the base wall 58d is continuous from the lower edge 57a of the abutting rear wall 57. Specifically, a folding line is defined on the lower edge 57a, and the base wall 58d is bent perpendicular to the abutting rear wall 57 and extends in contact with the exterior surface 90d of the base wall of the game machine 90. The connection portion 58 is again bent along the folding line 58b such that the attachment portion 58a stands upright. The folding line 58b is defined in a position apart from the lower edge 57a of the abutting rear wall 57 by a distance slightly longer than the front-back length of the game machine 90. Therefore, with the connection portion 58 bent such that the attachment portion 58a stands upright, one surface 58e of the attachment portion 58a is resultantly located facing the outside surface 56a (the side opposite the side abutting on the game machine 90) of the abutting front wall 56, leaving a slight interval in-between. The one surface 58e of the attachment portion 58a and the surface 56a of the abutting front wall 56 are provided with attachment means 59, for example, a hook-and-loop fastener, such as a magic tape (registered trademark) or the like, a button, a magnet, and so forth for fastening opposing surfaces to each other. With the above, the attachment portion 58a can be attached or removed relative to the abutting front wall 56.

Therefore the distance between the abutting front wall 56 and the abutting rear wall 57 is defined by the connection portion 58 to be prevented from becoming longer than the front-back length of the game machine 90. This enables the game machine 90 to be reliably held by and between the abutting front wall 56 and the abutting rear wall 57. The attachment portion 58a is attached to the abutting front wall 56 by means of the attachment means 59 so that the connection portion 58 is not readily detached from the abutting front wall 56. Consequently, the stereoscopic spectacles 1 can more reliably hold the game machine 90.

In the following, the spectacles supporting portion 50 will be described. The spectacles supporting portion 50 has a form like a hollow column. As shown in Fig. 1, the spectacles supporting portion 50 stands upright around the display screen 91, extending above from the flat surface including the display screen 91 while fully surrounding the space between the display screen 91 and the spectacles portion 30 to thereby shield the display screen 91 from the outside. The spectacles portion 30 is held opposed to the display screen 91 by the upper edge of the spectacles supporting portion 50. As shown in Fig. 2, the spectacles supporting portion 50 has a front wall 52, a rear wall 53, a right wall 54, and a left wall 55, all walls standing upright.

The rear wall 53 is substantially rectangular and formed integral with the abutting rear wall 57, extending upward from the abutting rear wall 57 (see Fig. 7). As shown in Fig. 2, a folding line is defined on the upper edge 53a of the rear wall 53. The spectacles portion 30 is formed continuous from the upper edge 53a, so that the spectacles portion 30 can be opened/closed relative to the display screen 91 with the upper edge 53a as a fulcrum.

The front wall 52 is formed integral with, and extending upward from, the abutting front wall 56 (see Fig. 1). A fixing portion 52a for fixing the spectacles portion 30 is formed in the middle of the upper portion of the front wall 52 in the right-left direction (the direction indicated by C in Fig. 1). Fixing of the spectacles portion 30 will be described later.

The right wall 54 is formed curving such that the middle portion thereof in the front-back direction expands outward so as to have a substantially arc cross section (see Fig. 1) . Similarly, the left wall 55 is formed curving such that the middle portion thereof in the front-back direction expands outward (see Fig. 8). On the right wall 54 and the left wall 55, a plurality of folding lines are defined extending in the direction in which the spectacles supporting portion 50 supports the spectacles portion 30, that is, the vertical direction. The right wall 54 and the left wall 55 bend slightly along the respective folding lines, and are thereby curved as a whole (see Fig. 2 or Fig. 1 and Fig. 8).

In using the stereoscopic spectacles 1, the spectacles supporting portion 50 supporting the spectacles portion 30 may be pressed downward (toward the game machine 90) by the face of the user using the stereoscopic spectacles 1 with their face placed in contact with the spectacles portion 30. In the above, the curved right wall 54 and left wall 55 reinforce the spectacles supporting portion 50 to thereby prevent the spectacles supporting portion 50 from collapsing towards the game machine 90 side, though the reinforcing structure of the spectacles supporting portion 50 is not limited to a structure having any side wall curved. For example, a member which is more rigid than cardboard may be attached to the spectacles supporting portion 50 so as to extend in the support direction of the spectacles portion 30.

As shown in Fig. 5 or Fig. 6, the lower edges 54e, 55e of the right wall 54 and the left wall 55, respectively, are placed on the exterior surface 90f of the upper wall of the game machine 90, such that the right wall 54 and the left wall 55 stand upright from the exterior surface 90f of the upper wall.

The stereoscopic spectacles 1 hold the game machine 90 such that the movement of the stereoscopic spectacles 1 relative to the game machine 90 is restricted. That is, the game machine 90 is held by the connection portion 58, and the right wall 54 and left wall 55 of the spectacles supporting portion 50 in the vertical direction. The game machine 90 is further held by the abutting front wall 56 and the abutting rear wall 57 abutting thereon from the front and rear directions thereof, respectively. With the above, the stereoscopic spectacles 1 are prevented from moving relatively to the game machine 90, so that the user can comfortably see the stereoscopic image.

The lower edges 54e, 55e of the right wall 54 and the left wall 55 are formed recessed toward the display screen 91 side so as to be placed between the display screen 91 and operation button 95a, 95b provided at the right and left of the display screen 91, respectively (see Fig. 1 or Fig. 8) . With the above, the user can comfortably operate the buttons 95a, 95b of the game machine 90.

Specifically, the middle portion of the lower edge 54e is formed recessed toward the center of the display screen 91 and placed between the edge of the display screen 91 and one of the plurality of right operation buttons 95a, which is located closest to the display screen 91. Similarly, the middle portion of the lower edge 55e is formed recessed toward the center of the display screen 91 and placed between the edge of the display screen 91 and one of the plurality of left operation buttons 95b, which is located closest to the display screen 91. More specifically, the lower parts of the right wall 54 and the left wall 55 are formed sloping, constituting sloping walls 54a, 55a, respectively. The sloping wall 54a extends obliquely upward from the portion of the lower edge 54e, closest to the display screen 91 towards the right operation button 95a side. Similarly, the sloping wall 55a extends obliquely upward from the portion of the lower edge 55e, closest to the display screen 91 towards the left operation button 95b side. That is, the stereoscopic spectacles 1 are mounted to the game machine 90 such that the right operation buttons 95a or the left operation buttons 95b are located outside the sloping walls 54a, 55a, as described above, so that the user can comfortably operate the game machine 90.

It should be noted that folding lines vertically extending in the middle portions of the sloping walls 54a, 55a are defined in the middle portions of the sloping walls 54a, 55a, so that the sloping walls 54a, 55a bend slightly along the folding lines to thereby increase the strength thereof.

It should be noted that although it is described that the stereoscopic spectacles 1 are formed such that the spectacles supporting portion 50 fully surrounds the space between the display screen 91 and the spectacles portion 30, an opening may be formed on any wall of the spectacles supporting portion 50, for example. In this case, the opening may be formed at a position which enables the user to look directly at the display screen 91 through the opening, rather than via the eyepieces 7a, 7b, so that more preferable stereoscopic spectacles 1 can be realized. Such stereoscopic spectacles 1 enable the user to look at an image other than a stereoscopic image shown on the display screen 91 without removing the stereoscopic spectacles 1 from the game machine 90.

In the following, a structure for enabling the spectacles portion 30 to open and close will be described. As described above, the spectacles portion 30 has a hanging portion 33. As shown in Fig. 1 or Fig. 2, the hanging portion 33 has a fixed portion 33a formed in the middle thereof in the right-left direction, with notches defined at the right and left thereof. Meanwhile, a fixing portion 52a is formed in the front wall 52 in the middle of the upper portion thereof in the right-left direction, with notches defined at the right and left thereof. The fixed portion 33a and the fixing portion 52a are engaged and disengaged with each other utilizing the notches.

The top surface 31 of the spectacles portion 30 has projections 34a, 34b projecting left and right, respectively, formed on the respective both side edges thereof (see Fig. 2). The right wall 54 and the left wall 55, forming the spectacles supporting portions 50, have slits 54b, 55b defined in the respective upper middle portions thereof in the front-back direction, so that the projections 34a, 34b are inserted into or pulled out of the slits 54b, 55b, respectively, whereby the spectacles portion 30 are attached to or separated from, that is, opened or closed, relative to the spectacles supporting portion 50.

It should be noted that as shown in Fig. 2, the back edge 54c of the right wall 54 is continuous to the rear wall 53, and the front edge 54d is continuous to the front wall 52, with folding lines defined on the back edge 54c and front edge 54d of the right wall 54.

Also, folding lines are defined on the back edge 55c and front edge 55d of the left wall 55. The front edge 55d of the left wall 55 is continuous from the front wall 52a. The back edge 55c of the left wall 55 is continuous from a separation connection portion 61 to be described later. A slit 55f is formed on the back edge 55c of the left wall 55. The rear wall 53 has a projection 53b projecting sideward to be inserted into the slit 55f (see Fig. 7) .

The spectacles supporting portion 50 is folded along the respective folding lines and the projection 53b is inserted into the slit 55f to thereby connect the back edge 55c of the left wall 55 to the rear wall 53, whereby spectacles supporting portion 50 is assembled as the hollow column (see Fig. 1 or Fig. 7).

In the following, the separator 60 will be described. As shown in Fig. 3, the separator 60 is in the form of plates, and abuts on the inside surface of the spectacles supporting portion 50 along the peripheral thereof to separate the space between the spectacles portion 30 and the display screen 91. That is, with the stereoscopic spectacles 1 mounted to the game machine 90, the substantially rectangular separator 60 stands upright (towards the spectacles portion 30) from the center in the right-left direction of the display screen 91, with the lower edge 60a thereof contacting the display screen 91 and the upper edge 60c thereof abutting on the top surface 31 of the spectacles portion 30. The upstanding back edge 60b abuts on the rear wall 53, while the front edge 60d abuts on the front wall 52.

As described above, the separator 60 separates the space between the spectacles portion 30 and the display screen 91 into a space for the right eye image area 91a and a space for the left eye image area 91b. That is, when the user views the display screen 91 via the eyepiece 7a, 7b, the separator 60 allows their right eye to view the right eye image area 91a while shielding the left eye image area 91b, and their left eye to view the left eye image area 91b, while shielding the right eye image area 91a.

The separator 60 has the rectangular corner cut off so as not to project outward through the opening 32a of the slope surface 32 when the stereoscopic spectacles 1 is completely assembled (see Fig. 1 or Fig. 2).

A folding line is defined on the front edge 60d of the separator 60, and the front edge 60d is continuous to a separation supporting portion 62. With the stereoscopic spectacles 1 completely assembled, the separation supporting portion 62 bends along the folding line at a right angle relative to the separator 60, and abuts on the front wall 52 (see Fig. 3). The separation supporting portion 62 has a projection 62a, which projects outward through a vertical long slit 52c formed in the vicinity of the middle of the front wall 52 (see Fig. 2 or Fig. 3). Further, as shown in Fig. 2, the separator 60 is continuous from the left wall 55 via the separation connection portion 61. That is, the back edge 60b of the separator 60 is continuous to the separation connection portion 61, which is continuous to the back edge 55c of the left wall 55. Folding lines are defined on the back edge 60b and the back edge 55d, and the stereoscopic spectacles 1 are folded along the back edge 55d, as shown in Fig. 7. Then, the separation connection portion 61 is placed inside on the rear wall 53, and the back edge 60b of the separator 60 is bent at a right angle, whereby the separator 60 is placed extending perpendicular to the separation connection portion 61 and the rear wall 53.

In the following, a method for assembling the stereoscopic spectacles 1 will be described. Initially, the stereoscopic spectacles 1 are sequentially folded along the front edge 60d and back edge 60b of the separator 60 and the back edge 55d and front edge 55c of the left wall 55. Then, the projection 62a of the separation supporting portion 62 is inserted into the slit 52c of the front wall 52 to project outward (see Fig. 2 and Fig. 1). In the above, the separator 60 is placed perpendicular to the front wall 52, the separation connection portion 61, and the rear wall 53. The separation connection portion 61 is placed inside on the rear wall 53, opposed to the front wall 52 (see Fig. 3 and Fig. 8). The left wall 55 is bent along the plurality of vertically extending folding lines to thereby be curved.

Thereafter, the separator 60, the separation connection portion 61, the left wall 55, the front wall 52, and the abutting front wall 56 are integrally folded along the front edge 54d and back edge 54c of the right wall 54. Then, the projection 53b formed on the rear wall 53 is inserted into the slit 55f of the left wall 55. With the above, the spectacles supporting portion 50 is assembled like the hollow column with the separator 60 located at the middle thereof, as shown in Fig. 4. Then, the spectacles portion 30 assembled in the state shown in Fig. 4 is bent toward the front wall 52 side with the upper edge 53a of the rear wall 53 as a fulcrum, and the fixed portion 33a of the hanging portion 33 is inserted into the fixing portion 52a of the front wall 52. Further, the projections 34a, 34b formed on the top surface 31 are inserted into the slit 54b of the right wall 54 and the slit 55b of the left wall 55, respectively.

Thereafter, while keeping the lower edges 54e, 55e of the right wall 54 and the left wall 55 abutting on the exterior surface 90f of the upper wall of the game machine 90, the connection portion 58 is folded along the lower edge 57a of the rear wall 57, and then along the folding line 58b such that the attachment portion 58a stands upright. Then, the one surface 58e of the attachment portion 58a is attached to the surface 56a of the abutting front wall 56 by means of the attachment means 59. In this manner, the stereoscopic spectacles 1 are mounted to the game machine 90, as shown in Fig. 3.

The above described stereoscopic spectacles 1 are mounted to the game machine 90 when used such that movement thereof relative to the game machine 90 is restricted. Therefore, according to the stereoscopic spectacles 1, the user playing the game while operating the buttons can comfortably look at the stereoscopic image as the spectacles portion 30 remains stable in position relative to the display screen 91.

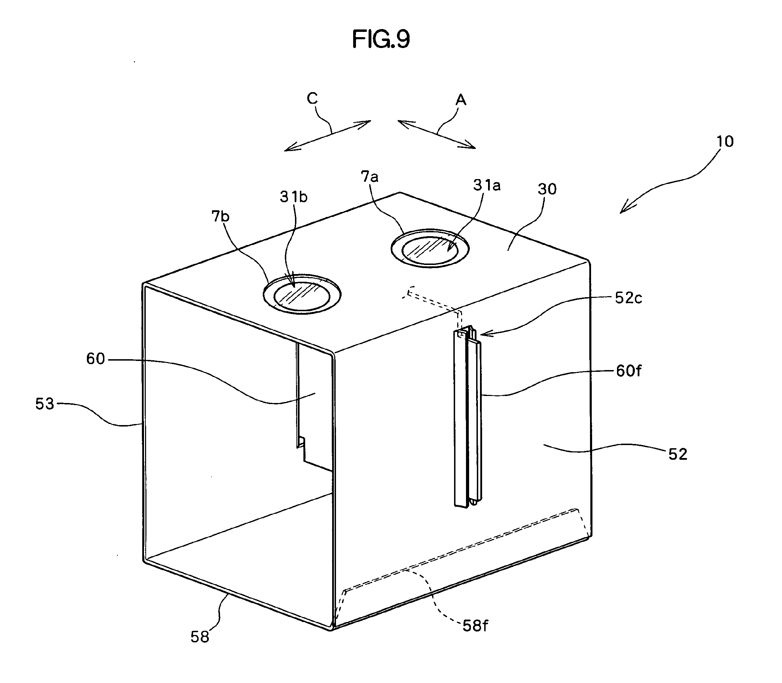

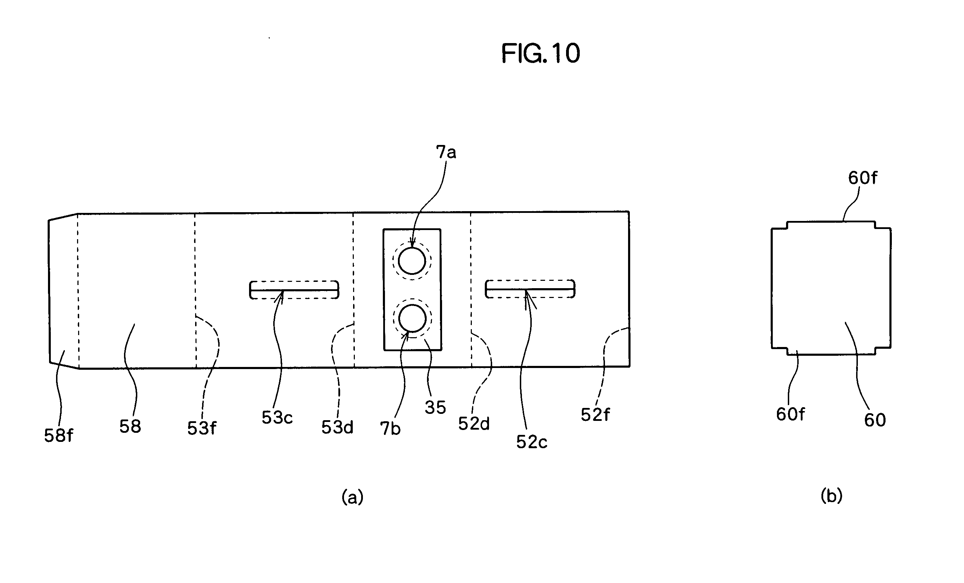

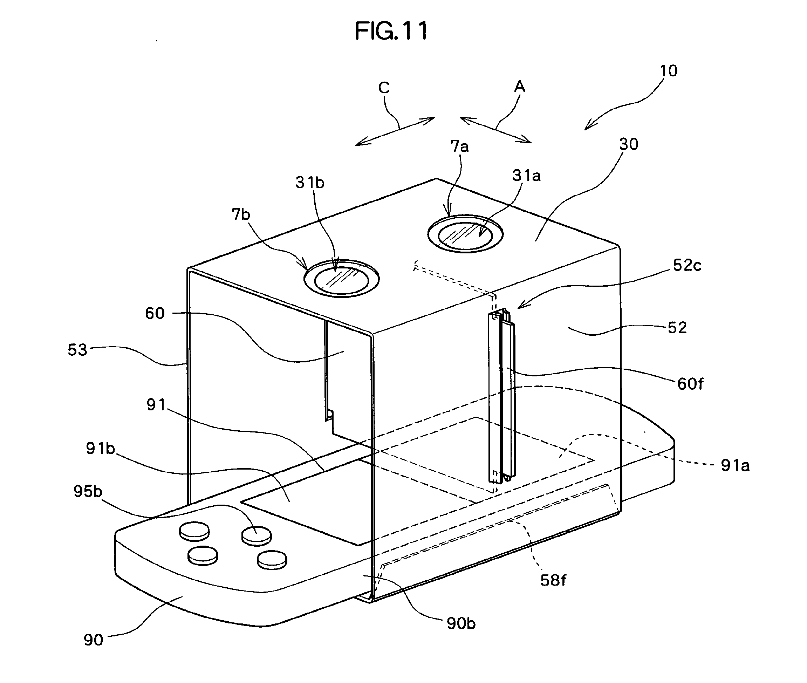

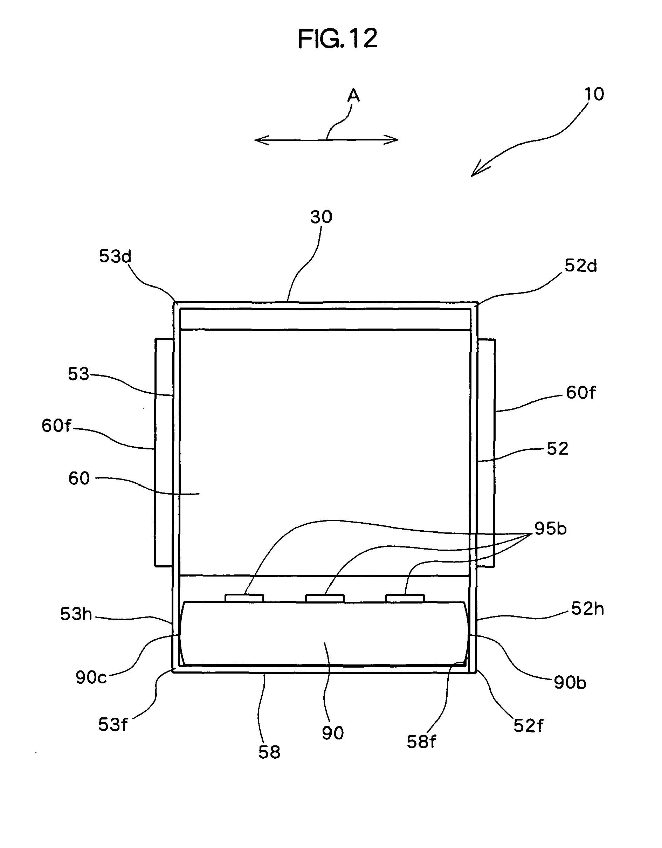

It should be noted that the present invention is not limited to the above described stereoscopic spectacles 1, and various other modifications are available. For example, like the stereoscopic spectacles 10 shown in Fig. 9 to Fig. 12, the stereoscopic spectacles 10 may be formed in a rectangular solid having two opposed walls thereof, out of the four walls, which are placed abutting on the respective exterior surfaces 90b, 90c of the side walls of the game machine 90 so as to together hold the display screen 91 in-between. Fig. 9 is a perspective view of the stereoscopic spectacles 10, and Fig. 10 is a development view of the stereoscopic spectacles 10. Fig. 11 is a perspective view of the stereoscopic spectacles 10 mounted to the game machine 90, and Fig. 12 is a left side view thereof. In these drawings, the same portion as that of the stereoscopic spectacles 1 is identified by the same reference numeral with the description thereof not repeated.

The front wall 52 and rear wall 53 of the stereoscopic spectacles 10 are rectangular panels, as shown in Fig. 10, and the front-back width (the direction indicated by A in Fig. 12) of each of the connection portion 58 and the spectacles portion 30 corresponds to the front-back width of the game machine 90, as shown in Fig. 12. The lower edge 52f of the front wall 52 and the lower edge 53f of the rear wall 53 are connected to each other via the connection portion 58 in the back side of the display screen 91. The upper edge 52d of the front wall 52 and the upper edge 53d of the rear wall 53 are connected via the spectacles portion 30 located above the display screen 91. The lower portion 52h (an abutting wall) of the front wall 52 is placed abutting on the exterior surface 90b of the side wall of the stereoscopic spectacles 10, and the lower portion 53h (an abutting wall) of the rear wall 53 is placed abutting on the exterior surface 90c of the side wall of the stereoscopic spectacles 10.

According to the above-described stereoscopic spectacles 10, as the front wall 52 and the rear wall 53 are brought to abut on the exterior surfaces of the side walls of the game machine 90 from the front and rear directions thereof, respectively, to thereby hold the display screen 91 in-between, positional displacement of the spectacles portion 30 relative to the display screen 91 is suppressed. Also, the user using the stereoscopic spectacles 10 can hold the stereoscopic spectacles 10 and the game machine 90 together from below the connection portion 58 of the stereoscopic spectacles 10.

It should be noted that the separator 60 of the stereoscopic spectacles 10 is prepared separately from the spectacles portion 30 or the like, as shown in Fig. 10. Slits 52c, 53c are defined in the middle portions in the right-left direction of the front wall 52 and the rear wall 53, respectively, and the separator 60 is inserted into the slits 52c, 53c on the front wall 52 and the rear wall 53, respectively, such that the ends 60f, 60f of the separator 60 are supported by the slits 52c and 53c, as shown in Fig. 11 or Fig. 12. It should be noted that the separator 60 may be freely inserted into and pulled out of the slits 52c, 53c.

Also, as shown in Fig. 10, the connection portion 58 has an attachment portion 58f formed on the side thereof opposite the side where the rear wall 53 is formed. The attachment portion 58f is attached to the lower edge 52f of the front wall 52, whereby the front wall 52 is connected to the rear wall 53 (see Fig. 9 or Fig. 12).

## Claims

1. Stereoscopic spectacles having a spectacles portion for stereoscopically viewing a stereoscopic image shown on a display screen of a portable game machine, comprising;
abutment walls placed opposed to each other for abutting on side surfaces of the game machine from two opposed directions with the display screen located in-between when the stereoscopic spectacles are used; and
spectacles supporting portions extending from the respective abutment walls opposed to each other, for supporting the spectacles portion so as to be placed opposed to the display screen of the game machine.

2. The stereoscopic spectacles according to claim 1, further comprising
a connection portion for connecting the abutment walls opposed to each other in the back side of the display screen.

3. The stereoscopic spectacles according to claim 2, wherein the connection portion includes attachment means for freely connecting and disconnecting the abutment walls opposed to each other.

4. The stereoscopic spectacles according to any one of claims 1 to 3, wherein the spectacles supporting portion is formed surrounding a space between the display screen and the spectacles portion.

5. The stereoscopic spectacles according to claim 4, wherein a part of a lower edge of the spectacles supporting portion is formed recessed towards the display screen side so as to be located between the display screen and an operation button provided around the display screen.

6. The stereoscopic spectacles according to any one of claims 1 to 5, wherein the spectacles supporting portion includes a reinforcing structure for increasing strength in a direction in which the display screen is opposed to the spectacles portion.

7. The stereoscopic spectacles according to any one of claims 1 to 6, further comprising:
a separator for separating a space between the spectacles portion and the display screen of the game machine into a right side space and a left side space.

8. The stereoscopic spectacles according to any one of claims 1 to 7, wherein
the spectacles portion includes a top surface having a pair of left and right eyepieces, and a slope surface continuous from the top surface and sloping from a portion where the slope surface and the top surface is connected, to extend towards one of the abutment walls opposed to each other.

9. The stereoscopic spectacles according to claim 8, wherein the spectacles portion includes an opening in a middle portion of the slope surface.
